# EUROPEAN PATENT APPLICATION

(11) **EP 1 759 816 A1**
(43) Date of publication of application: **07.03.2007**
(21) Application number: 05748819.9
(22) Date of filing: 09.06.2005
(51) Int. Cl.: B25J 9/06

(54) **INDUSTRIAL ROBOT**

(30) Priority: 22.06.2004 JP 2004183280
(71) Applicant: MATSUSHITA ELECTRIC INDUSTRIAL CO., LTD., Osaka 571-8501 (JP)
(72) Inventor: NAGAI, Takashi, Osaka-shi, Osaka - 532-0022 (JP); MUKAI, Yasushi, Osaka-shi, Osaka 534-0016 (JP); TAKAHASHI, Wataru, Osaka-shi Osaka 555-0033 (JP); MISHIMA, Toshiyuki, Osaka 572-0058 (JP); OHARA, Takayasu, Yodogawa-ku, Osaka-shi, Osaka 532-0022 (JP)
(74) Representative: Grünecker, Kinkeldey, Stockmair & Schwanhäusser Anwaltssozietät
(86) International application number: PCT/JP2005/010590
(87) International publication number: WO 2005/123349

(57) **Abstract**

In case a robot performs work inside the box-shaped workpiece held on a jig 16, it is possible to avoid interference with an interference point 18 in a curved recessed space of the arm by curving the first arm of the robot 9 in a direction of rotation with respect to a swing part 4 and in a direction opposite to the interior angle formed by the first arm 9 and the second arm 12. This allows work to be done as far as the work bottom 19. As a result, it is possible to reserve a wider work area 20 inside the workpiece than the work area inside the workpiece of a related art robot.

## Description

### Technical Field

The present invention relates to an industrial robot having a perpendicular articulation.

### Background Art

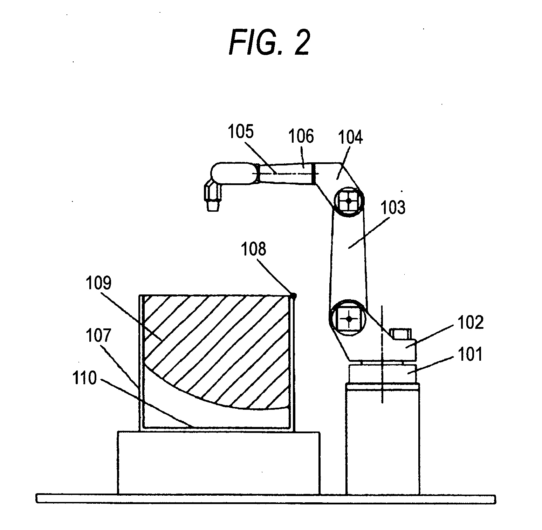

A conventional industrial robot having a perpendicular articulation comprises, as shown in Fig. 2, a base 101 for installation, a swing part 102 swing with respect to said base 101, a first arm 103 swing together with said swing part 102 with respect to said base 101 and rotating with respect to said swing part 102 and a second arm 104 swing together with said swing part 102 with respect to said base 101 and rotating with respect to said first arm 103, and, at the tip of the second arm 104 attached a wrist 106 having three degrees of freedom including a wrist rotating axis 105 (for example, refer to JP-A-10-6271).

### Disclosure of Invention

### [Problems to be solved]

The conventional robot has often faced the problem of interference between the first arm 103 and a workpiece 107. For example, as shown in Fig. 2, in case a robot performs work inside a workpiece 107 having the shape of a box, the first arm 103 and the workpiece 107 interfere with each other at an interference point 108. There sometimes occurred the problem that the work area 109 inside the workpiece of the robot does not reach a work bottom 110 so that the robot cannot perform work near the work bottom 110.

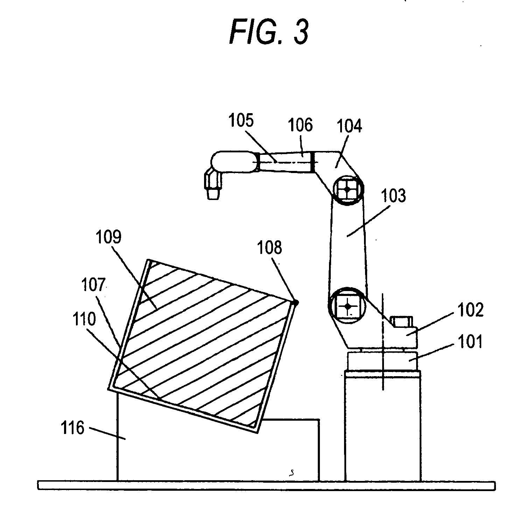

Typically in such a case, a shown in Fig. 3, a jig 106 is used to set the workpiece 107 at an appropriate position to avoid interference between the workpiece 107 and the robot during work.

Recently, a small lot multi-production is a trend in a job site using an industrial robot, and a robot must perform work on a variety of workpieces. Preparing jigs for various types of workpieces invites a rise in the manufacturing cost. This presents a need for a robot designed to show reduced interference with a workpiece or a jib supporting a workpiece.

In view of the related art problems, an object of the invention is to provide an industrial robot designed to show reduced interference between the first arm and a workpiece or a jig.

### [Means for solving the problems]

In order to solve the problems, the industrial robot according to the invention comprises at least a base for installation, a swing part swing with respect to said base, a first arm swing together with said swing part with respect to said base and rotating with respect to said swing part, and a second arm swing together with said swing part with respect to said base and rotating with respect to said first arm, said first arm is curved in the rotating direction with respect to the swing part.

With this configuration, a recessed area is formed on the curved first arm. This reduces interference between the first arm and a workpiece or a jig at the recessed part of the first arm.

### [Effect of the Invention]

In this way, the first arm is curved in the rotating direction with respect to the swing part in the invention, which reduces interference between the first arm and a workpiece or a jig at the recessed part of the first arm.

### Brief Description of Drawings

Fig. 1 is a side view of a broken workpiece for an industrial robot according to an embodiment of the invention;
Fig. 2 is a side view of a side view of a broken workpiece for a related art industrial robot; and
Fig. 3 shows a use example of a jig for a related art industrial robot.

### Best Mode for Carrying Out the Invention

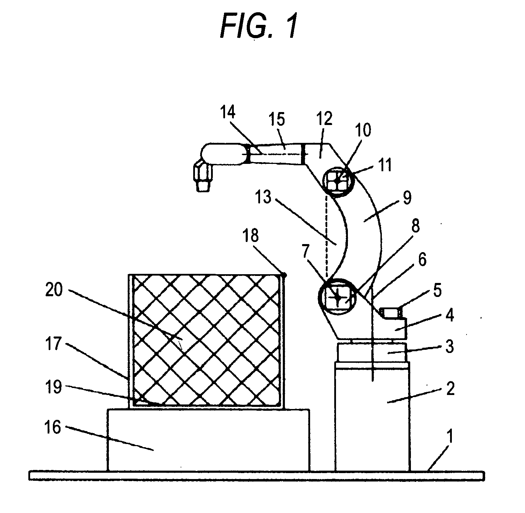

A first embodiment of the present invention will be explained with reference to Fig. 1. A base 3 is fixed on the top of a mounting table 2 that is attached on an installation surface 1.

A swing part 4 mounted on the base 3 is attached in a manner that it can swig with respect to the base 3 with respect to a swing axis 6 perpendicular to the installation surface by way of power of a swing drive part 5 comprising a motor and a reducer.

A first arm rotating axis 7 perpendicular to a swing axis 6 is provided at a position offset from a swing axis 6 on the swing part 4. On the first arm rotating axis 7 is attached a first arm 9 rotatable by a first arm drive part 8 attached to the swing part 4 with respect to the swing part 4.

On the other end of the first arm 9 is provided a second arm rotating axis 10 parallel to the first arm rotating axis 7. To the second arm rotating axis 10 is rotatably attached a second arm 12 with respect to the first arm 9 by the power of a second arm drive part 11.

Said first arm 9 is formed in a shape curved in a direction of rotation with respect to the swing part 4 and in a direction opposite to the interior angle formed by the first arm 9 and the second arm 12 and having a recessed space 13 on the side of the interior angle. In this practice, the center of gravity of said first arm is offset with respect to a line segment connecting the first arm rotating axis 7 and the second arm rotating axis 10 and positioned in a direction opposite to the interior angle formed by the first arm 9 and the second arm 12.

On the tip of the second arm 12 is attached a wrist 15 having three degrees of freedom including a wrist rotating axis 14 that is perpendicular to the second arm rotating axis 10 and offset above the second arm rotating shaft 10. A welding torch or a handling device may be attached to the wrist 15.

With this configuration, in case the robot performs work inside the box-shaped workpiece held on a jig 16, it is possible to avoid interference with an interference point 18 in a curved recessed space 13 of the arm. This allows work to be done as far as the work bottom 19. As a result, it is possible to reserve a wider work area 20 inside the workpiece than the work area inside the workpiece of a related art robot. That is, the robot of this configuration reduces interference with a workpiece or a jig compared with a related art robot.

The effect of the invention is not limited to work inside a box-shaped workpiece but generally reduces interference between a first arm and an obstacle in the operating range of the first arm.

While the invention has been detailed referring to a specific embodiment, those skilled in the art will recognize that various changes and modifications can be made in it without departing from the spirit and scope thereof
This application is based on Japanese Patent Application No. 2004-183280 filed June 22, 2004 and is incorporated herein by reference.

### [Industrial Applicability]

The industrial robot according to the invention reduces interference between the first arm of a robot and a workpiece and is efficient as an industrial robot.

## Claims

1. An industrial robot comprising:
a base for installation,
a swing part swing with respect to said base,
a first arm swing together with said swing part with respect to said base and rotating with respect to said swing part, and
a second arm swing together with said swing part with respect to said base and rotating with respect to said first arm,
wherein said first arm is curved in the rotating direction with respect to the swing part.

2. The industrial robot according to claim 1, wherein said the first arm is curved in a direction opposite to the interior angle formed by said first arm and said second arm.

3. An industrial robot comprising:
a base for installation,
a swing part swing with respect to said base,
a first arm swing together with said swing part with respect to said base and rotating with respect to said swing part, and
a second arm swing together with said swing part with respect to said base and rotating with respect to said first arm,
wherein a center of gravity of said first arm is offset with respect to a line segment connecting the first arm rotating axis with respect to said swing part and the second arm rotating axis with respect to said first arm.

4. The industrial robot according to claim 3, wherein the center of gravity of said first arm is positioned in a direction opposite to the interior angle formed by said first arm and said second arm.
